# EUROPEAN PATENT APPLICATION

(11) **EP 0 849 534 A2**
(43) Date of publication of application: **24.06.1998**
(21) Application number: 97120340.1
(22) Date of filing: 20.11.1997
(51) Int. Cl.: F23J 15/06, F23J 15/04, F23J 11/00

(54) **Fume discharge device for a thermal plant**

(30) Priority: 22.11.1996 IT PD960097 U
(71) Applicant: Bonora, Renato, 38060 Riva del Garda (TN) (IT)
(72) Inventor: The designation of the inventor has not yet been filed

(57) **Abstract**

Advanced fumes emission termic plant, comprising of at least a combustion device with production of fumes containing water steam, and an emission pipe line of the fumes in the atmosphere, characterized in that the presence of a surface heat exchanger suitable to be crossed by the fumes before their inlet into the emission pipe to exchange heat with air withdrawn from the surroundigs and forced out of the heat exchanger to enter into said emission pipe, in such a way to mix with the fumes before they arrive at the outlet hole of said pipe.

## Description

This invention relates to an improved fumes emission thermic system and its use. Many thermic systems forecasting the presence of a device in which the combustion occurs with a generation of fumes containing water and an exaust pipe of the fumes in the atmosphere are well known.

We are referring to systems which may by made in many different shapes, e.g. to a device for generating home heating in which a high-temperature water boiler sending the produced fumes directly to the stack is present; or complex plants in which the fumes produced by a combustor, such as incineration plants or solvent combustors or steam generators, are introduced into the exhaust pipe only after their passage through different and several devices such as scrubbers and particularly wet scrubbers.

When the fumes from the exaust pipe reach the atmosphere, due to the contained water, a plume is generated and this result in a psychological worry; moreover, it must be underlined that the fumes carry large amounts of polluting substances.

Many device have been suggested in order to minimize these disavantages; but all are not fully satisfactory. The purpose of the present invention is to realize a thermic system in which the emission of fumes can be improved whether from the point of the view of the absence of the plume or relatively to the reduction of the pollutants.

We have now found a new and original improved fumes emission thermic system, comprising of, at least, a device where combustion producing water steam containing fumes occurs and an exhaust pipe into the atmosphere. Said device is characterized by the presence of a surface heat exchanger which receives the fumes before their inlet into the exhaust pipe to exchange heat and air from the surroundings. The heated air is allowed to exit from the exchanger to enter the said exhaust pipe in such a way as to mix the fumes before they arrive to the outlet pipe.

Advantageously, a plant comprising of at least a combustion device, a wet scrubber of the produced fumes and an exhaust pipe of said fumes into the atmosfere is characterized by the fact that the heat exchanger is crossed by the fumes before their inlet into the wet scrubber.

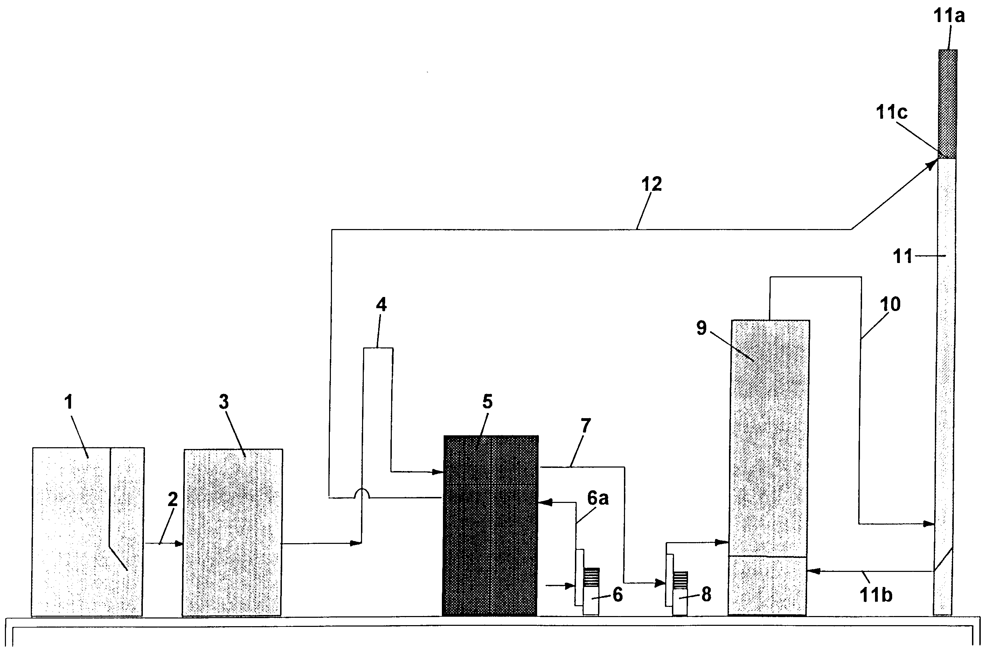

Further characteristics and advantages will results more evident from the description of a preferred but not execlusive figure of this invention. Said shape is illustrated indicatively but not limitatively in the attached drawing in which the one figure represents the scheme of the plant.

Referring to the above-said drawing, the combustion device is indicated with 1. Fumes, genereted in the combustion device, containing steam are directed into the pipe 2 and introduced into the wet scrubber 3 where a part of the dusts are removed by different ways, such as filters or cyclons.

Pipe 4 converges the fumes leading the wet scrubber 3 to the surface heat-exchanger 5 in which they exchange heat with air withdrawn from the surroundings by the ventilator fan 6 and introduced into the exchanger through pipe 6a.

Leaving heat-exchanger 5 the fumes, which advantageously but have not necessarily arrived to the dew point, are forced from pipe 7 and , due to the action of the ventilator, attain the wet scrubber 9. The fumes then leave the scrubber through pipe 10 and arrive at the bottom of pipe 11 giving out to the atmosphere through the outlet hole 11a. The emission pipe is advantageously constructed without heat insulation but can be of polymeric material, such as vinyl chloride resin, polyethene, polypropylene and near its bottom pipe 11b condensation formed in the stack is present. This condensation water is sent to the wet scrubber as a part of restoration.

As an alternative solution said condensation water could be removed.

The air from the surroundings is introduced into the heat exchanger 5 through pipe 6a. IT is heated and sent, through pipe 12, to the emission pipe 11 connected with section 11c by the outlet hole 11a, in such a way AS to mix with the fumes.

Therefore, the favourable condition is achieved. The aeriform material, formed by mixed fume and pre-heated air, is emitted from pipe 11 at a relative humidity far from the saturation conditions so that it can be dispelled in the atmosphere without being seen and lacking in plume.

Furthermore, the less amount of water contained in the gas emitted by the described plant in confront of what happens in the other known plants decreases the dragging of pollutants, thus improving the quality of the emission.

But the other advantages due to the plant according to this invention are several.

The decrease in the temperature of the fumes entering into the wet scrubber determines the decrease of evaporated water. The results is a minor amount of water in the fumes from the scrubber and an improved efficiency in the depuration process.

Moreover, the presence of a fluid as the air in heat exchanger 5 results particularly positive in that the lack of condensation will not result in any corrosive effect.. Therefore, in the manufacturing of the heat exchanger, very common and cheap materials, such as cheap and high thermal conductivity manufactured steels, can be used.

The particular conditions of the fumes arriving to the emission pipe , as already said, enable it to be manifactured with polymeric materials without any risk of degradation due to the condensation and heat of the fumes. It has to be emphasized that the mixing of the fumes piped from the emission pipe with the pre-heated air achieved in a section near the outlet hole of the pipe allows the condensation of part of the steam contained in the fumes upstream said section, recovering the condensation fluid at the bottom of the pipe and sending the same to the wet scrubber through the described pipe 11b, or wasting it.

The described invention is susceptible to several modifications and variations, all of them to be included in the law of the inventive concepts. Thus, e.g., in a plant lacking in the wet scrubber the heat exchanger will be located earlier in the process of the emission pipe of the fumes in the atmosphere.

## Claims

1. Advanced fumes emission termic plant, comprising of at least a combustion device with production of fumes containing water steam, and an emission pipe line of the fumes in the atmosphere, characterized in that the presence of a surface heat exchanger suitable to be crossed by the fumes before their inlet into the emission pipe to exchange heat with air withdrawn from the surroundigs and forced out of the heat exchanger to enter into said emission pipe, in such a way to mix with the fumes before they arrive at the outlet hole of said pipe.

2. Plant, according to claim 1) which comprises of at least one combustion device, a wet scrubber of the so produced fumes, and an emission pipe of said fumes in the atmosphere, characterized in that the heat exchanger is crossed by the fumes before their inlet into the wet scrubber.

3. Plant, as claimed in one or more previous claims, characterized in that the heat exchanger is computed and constructed in such a way to determine the outlet of the fumes from itself without arriving at dew conditions.

4. Plant, according to one or more previous claims, characterized in that the adduction pipe of the air exiting the heat exchanger to the emission pipe is connected to the said pipe nearby the outlet hole.

5. Plant, according to one or more previous claims, characterized in that the emission pipe of the fumes in the atmosphere is made up of polymeric materials.

6. Plant, according to one or more previous claims, characterized in that the emission pipe of the fumes in the atmosphere is produced in polymeric materials lacking in thermic insulation.
